# EUROPÄISCHE PATENTANMELDUNG

(11) **EP 1 537 944 A1**
(43) Veröffentlichungstag der Anmeldung: **08.06.2005**
(21) Anmeldenummer: 03405856.0
(22) Anmeldetag: 01.12.2003
(51) Int. Cl.: B23Q 11/00, B08B 15/04

(54) **Späneschutzgitter**

(71) Anmelder: UT 99 AG, 8493 Saland (CH)
(72) Erfinder: Stroitz, Winifred, 8493 Saland (CH)
(74) Vertreter: Clerc, Natalia

(57) **Zusammenfassung**

Ein Partikel- oder Späneschutzgitter (18) einer Absaugvorrichtung einer Bearbeitungsmaschine, insbesondere einer spanabhebenden Werkzeugmaschine, ist gewölbt, insbesondere halbkugelförmig, ausgebildet und vollständig im Absaugrohr (4) angeordnet. Es beansprucht dadurch keinen Platz im Maschinenraum und vereinfacht die Reinigung.

## Beschreibung

### Technisches Gebiet

Die Erfindung betrifft ein Partikel- oder Späneschutzgitter gemäss Oberbegriff des Patentanspruchs 1 und eine Absaugvorrichtung gemäss Oberbegriff des Patentanspruchs 6.

### Stand der Technik

Spanabhebende Werkzeugmaschinen, insbesondere Fertigungszentren, weisen üblicherweise Absaugvorrichtungen auf, welche verschmutzte, insbesondere ölhaltige Luft aus dem Maschinenraum absaugen. Um zu verhindern, dass auch die herumwirbelnden Späne abgesaugt werden, welche die Absaugvorrichtung beschädigen und verstopfen könnten, werden Späneschutzgitter verwendet.

Dieses Späneschutzgitter ist üblicherweise ein flaches Gitter, welches in der Luftabsaugöffnung der Gehäusewand der Werkzeugmaschine eingelassen ist. Dieses Gitter stoppt angesaugte Späne und hält sie im Maschinenraum zurück. Die Späne haben die Tendenz, sich am Gitter abzulagern. Diese Ablagerungen verkleinern den Querschnitt der Absaugöffnung, so dass mit der Zeit die Saugleistung nicht mehr genügt. Eine regelmässige Reinigung des Gitters ist deshalb notwendig.

Aus DE 102 59 253 ist ferner ein Späneschutzgitter in Form eines quaderförmigen Spänekorbs aus Draht- oder Kunststoffgewebe bekannt. Dieser ist an der Gehäuseinnenseite montiert und ragt in den Maschinenraum hinein. Zur Reinigung des Spänekorbs wird eine Reinigungsdüse eingesetzt, welche um ihre eigene Achse drehbar gelagert ist. Durch diese Reinigungsdüse wird ein Reinigungsmedium in den Spänekorb gespritzt, um die am Korb anhaftenden Späne wieder in den Maschinenraum zurückzuschleudern. Dieser Spänekorb weist den Nachteil auf, dass er relativ viel Platz beansprucht. Zudem lassen sich die Eckbereiche des Spänekorbs nur sehr schlecht reinigen.

Ähnliche Problematiken stellen sich auch bei anderen Bearbeitungsmaschinen, beispielsweise bei Textilbearbeitungsmaschinen.

### Darstellung der Erfindung

Es ist deshalb eine Aufgabe der Erfindung, ein Partikel- oder Späneschutzgitter zu schaffen, welches eine einfachere Reinigung ermöglicht und wenig Platz im Maschinenraum beansprucht und den Querschnitt des Ansaugrohrs nicht verringert.

Diese Aufgabe löst ein Partikel- oder Späneschutzgitter mit den Merkmalen des Patentanspruchs 1 und eine Absaugvorrichtung mit den Merkmalen des Patentanspruchs 6.

Das erfindungsgemässe Partikel- oder Späneschutzgitter ist gewölbt, vorzugsweise teilkugelförmig ausgebildet. Dadurch weist es im Vergleich zu seinem Durchmesser eine relativ grosse Oberfläche auf.

Dank seiner gewölbten, insbesondere dank seiner teilkugelförmigen Form lässt sich das Gitter über seine gesamte Fläche gleich gut reinigen. Die Form, insbesondere das Fehlen von Eckbereichen, verhindert zudem weitgehend, dass abgelagerte Späne Nester bilden können.

In einer bevorzugten Ausführungsform ist das Gitter drehbar gelagert. Diese Lagerung ermöglicht eine Reinigung mit einer minimalen Anzahl Reinigungsdüsen. Eine einzige Düse reicht bereits aus.

In einer weiteren bevorzugten Ausführungsform ist das Gitter mindestens teilweise, vorzugsweise vollständig innerhalb eines Absaugrohrs der Absaugvorrichtung angeordnet und benötigt somit einen minimalen Platz innerhalb des Maschinenraums.

In einer bevorzugten Ausführungsform ist das Absaugrohr lösbar am Gehäuse der Werkzeugmaschine befestigt. Dieses Absaugrohr lässt sich auch mit anderen als das hier beschriebene Späneschutzgitter einsetzen.

Weitere vorteilhafte Ausführungsformen gehen aus den abhängigen Patentansprüchen hervor.

### Kurze Beschreibung der Zeichnung

Im folgenden wird der Erfindungsgegenstand anhand von bevorzugten Ausführungsbeispielen, welche in der beiliegenden Zeichnung dargestellt sind, erläutert. Es zeigen:
- Figuren 1a: einen Längsschnitt durch einen Teil einer erfindungsgemässen Absaugvorrichtung mit einem erfindungsgemässen Partikel- oder Späneschutzgitter gemäss einer ersten Ausführungsform;
- Figur 1b: eine Ansicht auf die Absaugvorrichtung gemäss Figur 1a von oben;
- Figur 2a: einen Längsschnitt durch einen Teil einer erfindungsgemässen Absaugvorrichtung mit einem erfindungsgemässen Partikel- oder Späneschutzgitter gemäss einer zweiten Ausführungsform und
- Figur 2b: eine Ansicht auf die Absaugvorrichtung gemäss Figur 2a von oben.

### Wege zur Ausführung der Erfindung

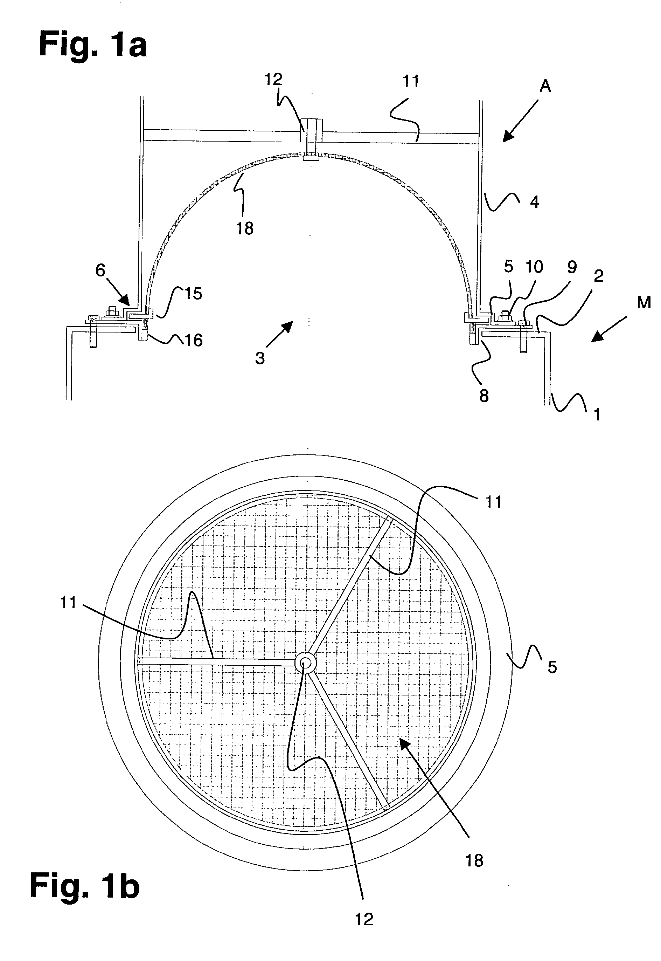

In den Figuren 1a und 1b ist eine erste Ausführungsform der erfindungsgemässen Absaugvorrichtung dargestellt. In einer Wand 2 eines Maschinengehäuses 1 einer Werkzeugmaschine ist eine Absaugöffnung 3 vorhanden, welche den Maschinenraum M mit der Absaugvorrichtung A verbindet. Üblicherweise ist die Absaugöffnung 3 in einer Decke des Gehäuses angeordnet. Sie kann sich jedoch an jeder geeigneten Stelle, beispielsweise an einer Seiten- oder Rückwand befinden.

In der Absaugöffnung 3 ist ein ringförmiges Winkelelement 7 angeordnet, welches auf dem die Absaugöffnung 3 umgebenden Rand der Wand 2 aufliegt und mittels mindestens eines ersten Befestigungsmittels 8, vorzugsweise mittels Schrauben, lösbar an der Wand 2 befestigt ist. Über der Absaugöffnung 3 befindet sich ein Absaugrohr 4 der Absaugvorrichtung A. Das Absaugrohr 4 weist an seinem unteren Ende einen umlaufenden Befestigungsflansch auf, welcher auf dem Winkelelement 7 aufliegt und mittels mindestens eines zweiten Befestigungsmittels 9, vorzugsweise wiederum Schrauben, an diesem lösbar befestigt ist. Dadurch lässt sich das Absaugrohr 4 auf einfache Art und Weise vom Gehäuse 1 entfernen und reinigen.

Im Absaugrohr 4 ist erfindungsgemäss ein Späneschutzgitter 18 angeordnet. Es befindet sich vorzugsweise vollständig innerhalb des Rohrs und ragt somit nicht in den Maschinenraum hinein. Es kann jedoch auch teilweise oder vollständig im Maschinenraum angeordnet sein.

Das Gitter 18 kann beispielsweise ein Metallsieb sein oder aus einem Draht- oder Kunststoffgewebe bestehen. Die Öffnungen des Gitters 18 sind dabei so klein ausgebildet, dass sie die Späne zurückhalten können. Dieses Späneschutzgitter 18 weist erfindungsgemäss eine gewölbte Form auf. Vorzugsweise ist es rotationssymmetrisch, insbesondere teil- oder halbkugelförmig. Seine Öffnung ist in der Gebrauchslage zum Maschinenraum hin gerichtet.

Im Absaugrohr 4 ist in geeigneter Höhe mindestens ein Steg 11 vorhanden. Hier sind es drei Stege 11, welche in einer Ebene liegen und an einem Punkt der Längsmittelachse des Absaugrohrs 4 miteinander verbunden sind. An dieser Stelle ist ein Aufhängemittel 12 befestigt. An diesem Aufhängemittel 12 ist das Späneschutzgitter 18 aufgehängt, vorzugsweise ist es im Bereich seiner Mittelachse beziehungsweise in seinem Schwerpunkt befestigt. Das Späneschutzgitter 18 ist dabei vorzugsweise drehbar gelagert.

Am unteren Ende des Späneschutzgitters 18 ist ein umlaufender Abschlussflansch 15 angeordnet. Dieser Flansch 15 greift in eine umlaufende Nut ein, welche durch eine Stufe 6 des Befestigungsflansches 5 und dem Winkelelement 7 gebildet ist. Damit ein Strömungskanal zwischen Späneschutzgitter 18 und Rohrmantelung 6 des Absaugrohrs 4 vermieden ist, ist eine umlaufende Bürste 16 vorhanden, welche am Winkelelement 7 befestigt ist und welche am Abschlussflansch 15 dichtend anliegt. Wird das Späneschutzgitter 18 und der Abschlussflansch 15 rotiert, so gleitet der Flansch 15 entlang der Bürste 16.

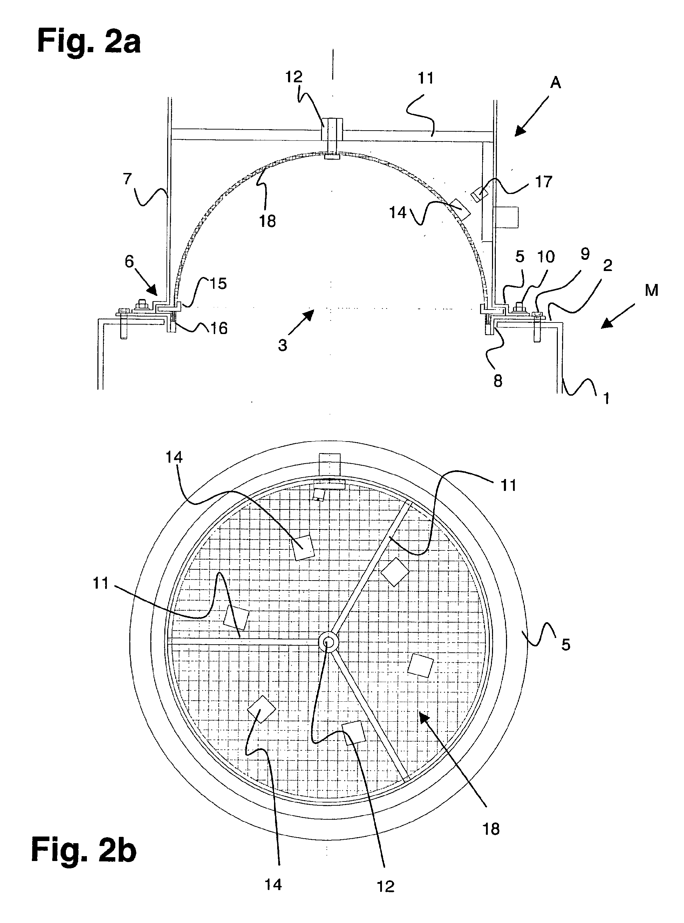

In den Figuren 2a und 2b ist ein weiteres bevorzugtes Ausführungsbeispiel dargestellt. Es ist im wesentlichen gleich aufgebaut wie das oben beschriebene Beispiel. Gleiche Merkmale sind deshalb mit gleichen Bezugsziffern bezeichnet. In diesem Beispiel ist jedoch mindestens eine Reinigungsdüse 17 vorhanden, welche im Bereich des Späneschutzgitters 18 angeordnet ist. Vorzugsweise ist sie an der Rohrmantelung 6 lagefixiert befestigt. Die Düse 17 ist vorzugsweise schräg zum Gitter 18 hin gerichtet. Vorzugsweise erstreckt sie sich in radialer Richtung zum Kugelmittelpunkt des Gitters 18 hin.

Über diese Düse 17 lässt sich ein Reinigungsmedium, beispielsweise Druckluft oder eine Reinigungsflüssigkeit, in Richtung Gitter 18 blasen oder spülen. Dadurch lassen sich Späne, welche sich am Gitter 18 angelagert haben, auf einfache Art und Weise in den Maschinenraum zurück befördern. Es ist somit nicht notwendig das Gitter zwecks Reinigung auszubauen. Vorteilhaft ist ferner, dass die mindestens eine Düse relativ wenig Platz benötigt und nicht eine zusätzliche Reinigungsvorrichtung am oder im Maschinengehäuse angebracht werden muss.

Ist das Späneschutzgitter 18 drehbar ausgebildet, so genügen wenige, insbesondere eine einzige Düse 17, auf einer Seite der Vorrichtung. Das Gitter 18 wird nämlich durch die Strömung des Reinigungsmediums gedreht, so dass die gesamte Gitteroberfläche 18 diese Düsen 17 passiert und so gereinigt werden kann. Damit die Drehung bereits bei geringen Strömungsgeschwindigkeiten erfolgt, weist das Gitter 18 an seiner äusseren, dem Maschinenraum abgewandten Oberfläche vorzugsweise Luftwiderstandsmittel 14 auf, welche der Oberfläche vorstehen und somit Angriffspunkte für die Strömung bilden. Derartige Luftwiderstandsmittel 14 sind beispielsweise vorstehende Metallplättchen oder andere Fähnchen.

Die zwei oben beschriebenen Beispiele stellen bevorzugte Ausführungsformen dar. Andere Ausführungsformen sind jedoch möglich. Beispielsweise kann auch ein anders geformtes Späneschutzgitter derart im Absaugrohr befestigt sein, dass es nicht in den Maschinenraum hineinragt und somit keinen Platz im Maschinenraum beansprucht. Auch in diesem Fall erleichtert die lösbare Befestigung des Absaugrohrs eine Reinigung des Späneschutzgitters.

Das erfindungsgemässe Späneschutzgitter beziehungsweise die erfindungsgemässe Absaugvorrichtung beanspruchen keinen Platz im Maschinenraum und vereinfachen die Reinigung.

### Bezugszeichenliste

- M: Maschinenraum
- A: Absaugvorrichtung
- 1: Maschinengehäuse
- 2: Wand
- 3: Absaugöffnung
- 4: Absaugrohr
- 5: Befestigungsflansch
- 6: Stufe
- 7: Rohrmantelung
- 8: Winkelelement
- 9: Erstes Befestigungsmittel
- 10: Zweites Befestigungsmittel
- 11: Steg
- 12: Aufhängmittel
- 14: Luftwiderstandsmittel
- 15: Abschlussflansch
- 16: Bürste
- 17: Reinigungsdüse
- 18: Späneschutzgitter

## Patentansprüche

1. Partikel- oder Späneschutzgitter (18) einer Absaugvorrichtung einer Bearbeitungsmaschine, insbesondere einer spanabhebenden Werkzeugmaschine, **dadurch gekennzeichnet, dass** es gewölbt ausgebildet ist.

2. Gitter nach Anspruch 1, wobei es teilkugelförmig, vorzugsweise halbkugelförmig, ausgebidet ist.

3. Gitter nach Anspruch 1, wobei es rotationssymmetrisch ausgebildet ist.

4. Gitter nach einem der Ansprüche 1 bis 3, wobei an seiner äusseren Oberfläche Luftwiderstandsmittel (14) angeordnet sind.

5. Gitter nach einem der Ansprüche 1 bis 4, wobei es in Gebrauchslage zum Maschinenraum hin offen ausgebildet ist.

6. Absaugvorrichtung einer Bearbeitungsmaschine, insbesondere einer spanabhebenden Werkzeugmaschine, mit einem Partikeloder Späneschutzgitter (18) gemäss einem der Ansprüche 1 bis 5, **dadurch gekennzeichnet, dass** das Gitter (18) drehbar gelagert ist.

7. Absaugvorrichtung nach Anspruch 6, wobei die Absaugvorrichtung ein Absaugrohr (4) aufweist und wobei das Gitter (18) mindestens teilweise, vorzugsweise ganz, innerhalb dieses Absaugrohrs (4) angeordnet ist.

8. Absaugvorrichtung nach Anspruch 7, wobei im Absaugrohr (4) mindestens ein Steg (10) angeordnet ist, an welchem ein Aufhängemittel (11) befestigt ist, an welchem das Gitter (18) im Bereich seiner Mittelachse aufgehängt ist.

9. Absaugvorrichtung nach Anspruch 6, wobei die Absaugvorrichtung ein Absaugrohr (4) aufweist, welches lösbar an einer Gehäusewand (2) der Werkzeugmaschine befestigbar ist.

10. Absaugvorrichtung nach einem der Ansprüche 6 bis 9, wobei sie mindestens eine Reinigungsdüse (17) aufweist, welche im Bereich des Gitters (18) angeordnet ist und mittels welcher am Gitter (18) angelagerte Späne in einen Maschinenraum der Maschine zurückbeförderbar sind.
